(19) Europäisches Patentamt
European Patent Office
Office européen des brevets

(11) **EP 3 608 847 B1**

(12) **FASCICULE DE BREVET EUROPEEN**

(45) Date de publication et mention de la délivrance du brevet:
**23.04.2025 Bulletin 2025/17**

(21) Numéro de dépôt: **19190273.3**

(22) Date de dépôt: **06.08.2019**

(51) Classification Internationale des Brevets (IPC):
*G06N 20/20* $^{(2019.01)}$   *G06N 5/00* $^{(2023.01)}$

(52) Classification Coopérative des Brevets (CPC):
**G06N 20/20;** G06N 5/01

(54) **DISPOSITIF ET PROCÉDÉ DE CLASSIFICATION MULTI-CLASSES PAR APPRENTISSAGE AUTOMATIQUE**

VORRICHTUNG UND VERFAHREN ZUR KLASSIFIZIERUNG MEHRERER KLASSEN DURCH AUTOMATISCHES LERNEN

DEVICE AND METHOD FOR AUTOMATIC MULTI-CLASS CLASSIFICATION BY MACHINE LEARNING

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **07.08.2018 FR 1857347**

(43) Date de publication de la demande:
**12.02.2020 Bulletin 2020/07**

(73) Titulaire: **Commissariat à l'Energie Atomique et aux Energies Alternatives**
**75015 Paris (FR)**

(72) Inventeur: **VASSILEV, Andréa**
**38054 Grenoble Cedex 9 (FR)**

(74) Mandataire: **Brevalex**
**56, Boulevard de l'Embouchure**
**B.P. 27519**
**31075 Toulouse Cedex 2 (FR)**

(56) Documents cités:
• **ZHANG XINGLIN ET AL: "Boosting Mobile Apps under Imbalanced Sensing Data", IEEE TRANSACTIONS ON MOBILE COMPUTING, IEEE SERVICE CENTER, LOS ALAMITOS, CA, US, vol. 14, no. 6, 1 June 2015 (2015-06-01), pages 1151 - 1161, XP011580416, ISSN: 1536-1233, [retrieved on 20150504], DOI: 10.1109/TMC.2014.2345053**

• **NAEEM SELIYA ET AL: "Addressing Class Imbalance in Non-binary Classification Problems", TOOLS WITH ARTIFICIAL INTELLIGENCE, 2008. ICTAI '08. 20TH IEEE INTERNATIONAL CONFERENCE ON, IEEE, PISCATAWAY, NJ, USA, 3 November 2008 (2008-11-03), pages 460 - 466, XP031360298, ISBN: 978-0-7695-3440-4**

• **LILI DIAO ET AL: "Training SVM email classifiers using very large imbalanced dataset", JOURNAL OF EXPERIMENTAL AND THEORETICAL ARTIFICIALINTELLIGENCE., vol. 24, no. 2, 14 September 2011 (2011-09-14), GB, pages 193 - 210, XP055582228, ISSN: 0952-813X, DOI: 10.1080/0952813X.2011.610033**

• **LORINTIU OANA ET AL: "Transportation mode recognition based on smartphone embedded sensors for carbon footprint estimation", 2016 IEEE 19TH INTERNATIONAL CONFERENCE ON INTELLIGENT TRANSPORTATION SYSTEMS (ITSC), IEEE, 1 November 2016 (2016-11-01), pages 1976 - 1981, XP033028608, DOI: 10.1109/ ITSC.2016.7795875**

## Description

## DOMAINE TECHNIQUE

La présente invention concerne le domaine d'apprentissage automatique et, plus particulièrement, la classification multi-classes.

## ÉTAT DE LA TECHNIQUE ANTÉRIEURE

L'apprentissage automatique (machine learning) est un outil algorithmique qui permet entre autres de construire un classifieur à partir d'une base de données. Pour que la classification par apprentissage automatique se déroule correctement et que le classifieur soit performant, en particulier pour que les classes minoritaires soient correctement apprises, il est avantageux que la base de données soit la plus équilibrée possible.

Habituellement, si les données ne sont pas équilibrées, on met en œuvre des techniques de rééquilibrage par sur-échantillonnage ou, plus couramment, par sous-échantillonnage des données.

Actuellement, plusieurs techniques de sous-échantillonnage sont utilisées dans le cadre de l'apprentissage automatique. Une première technique consiste à éliminer aléatoirement des échantillons des classes majoritaires. Une telle technique est décrite par H. He dans l'article intitulé « Learning from Imbalanced Data », IEEE Transactions on knowledge and data engineering, ol. 21, no. 9, 2009. Le principal défaut de cette technique est la perte d'information et surtout le risque de supprimer des données qui peuvent être pertinentes vis-à-vis des classes majoritaires.

Afin de résoudre ce problème, il existe une deuxième technique décrite par exemple, par X. Y. Liu et al. dans l'article « Exploratory undersampling for class-imbalance learning », IEEE Trans. Syst. Man Cybern. Part B Cybern., vol. 39, no. 2, pp 539-550, 2009. Cette deuxième technique consiste à sous-échantillonner indépendamment plusieurs sous-ensembles de la classe majoritaire et à construire un classifieur pour chacun de ces sous-ensembles. Au final, on obtient une pluralité de classifieurs qui sont ensuite fusionnés, par exemple, par un vote majoritaire en un seul classifieur. Toutefois, cette méthode nécessite la réalisation et le stockage de plusieurs classifieurs consommant ainsi beaucoup de temps de calcul et d'espace de stockage. De plus, cette méthode ne s'applique que pour une classification binaire et n'est pas adaptée pour une classification multi-classes.

Il existe une autre technique qui combine le sous-échantillonnage aléatoire avec un processus de stimulation « boosting ». Toutefois, cette dernière technique a les mêmes inconvénients que la technique précédente.

Il existe une technique décrite par Zhang Xinglin et al., dans l'article « Boosting Mobile Apps under Imbalanced Sensing Data » IEEE Transactions on mobile computing IEEE Service center, Los Alamitos, Ca, US, vol. 14 no. 6, juin 2015. Cette technique consiste à construire des modèles à partir des bases de données non équilibrées en utilisent un sous-échantillonnage classique. Cette technique est très gourmande en temps de calcul et en mémoire.

L'objet de la présente invention est de proposer un procédé et un dispositif de classification multi-classes d'une application par apprentissage automatique remédiant aux inconvénients précités, en particulier en fournissant un dispositif adapté pour mettre en œuvre une technique d'équilibrage de données par sous-échantillonnage sans perte d'information ni suppression de données potentiellement pertinentes tout en minimisant les étapes de calcul et l'espace de stockage des données.

## EXPOSÉ DE L'INVENTION

La présente invention est exposée dans le jeu de revendications joint. En particulier, on considère un dispositif de classification multi-classes de type téléphone portable d'une application relative à une classification d'un mode de transport par apprentissage automatique, comportant :

- des capteurs configurés pour mesurer à des instants successifs des grandeurs physiques spécifiques à ladite application,
- un microprocesseur configuré pour :

  - acquérir lesdites mesures successives depuis les capteurs pour calculer des prédicteurs à partir de grandeurs physiques desdites mesures, lesdits prédicteurs étant indicatifs d'une position ou d'un état de mobilité,
  - construire des suites continues d'échantillons, chaque échantillon étant un vecteur formé d'un nombre prédéterminé de prédicteurs,
  - décomposer chaque suite d'échantillons en un ensemble de séquences correspondant chacune à une classe spécifique parmi un ensemble de classes prédéterminées, ledit ensemble de classes prédéterminées correspondant à différents modes de transport,
  - sous-échantillonner des séquences associées à des classes parmi ledit ensemble de classes prédéterminées en conservant pour chaque séquence sélectionnée une fraction prédéterminée d'échantillons de ladite séquence, formant ainsi des classes associées à des échantillons équilibrés, et
  - construire un classifieur définissant la classification de mode de transport à partir desdits échantillons équilibrés par apprentissage automatique.

Le dispositif selon l'invention met ainsi en œuvre une technique de sous-échantillonnage permettant d'uniformiser le nombre d'échantillons par classe en l'appliquant à des séquences distinctives et non pas sur l'ensemble des échantillons. Ceci permet de simplifier la technique de sous-échantillonnage sans perte d'information ni suppression de données potentiellement pertinentes tout en minimisant les étapes de calcul et le stockage des données et par conséquent, permet de construire un classifieur multi-classes de l'application très performant.

Avantageusement, la fraction prédéterminée d'échantillons comporte des échantillons aux bornes de la séquence ainsi que certains échantillons intermédiaires.

Ceci permet de garder les échantillons transitoires entre les différentes séquences sachant que ces éléments peuvent être pertinents tout en supprimant une partie des éléments stationnaires.

Avantageusement, les échantillons intermédiaires sont régulièrement espacés dans ladite séquence en sélectionnant un échantillon sur un nombre prédéterminé d'échantillons.

Ceci permet de faciliter la sélection des échantillons.

Avantageusement, les séquences sont associées à un sous-ensemble de classes majoritaires parmi ledit ensemble de classes prédéterminées.

En effet, il est plus rapide, plus simple et plus pertinent de n'appliquer le sous-échantillonnage que sur les classes majoritaires même si la technique peut être appliquée systématiquement sur toutes les classes.

Selon une première définition, une classe majoritaire est une classe dont le nombre d'échantillons est supérieur à la valeur moyenne d'échantillons des différentes classes.

Ceci permet d'avoir un premier critère simple à mettre en œuvre pour définir une classe majoritaire selon la présente invention.

Selon une deuxième définition, une classe majoritaire est une classe dont le nombre cumulé d'échantillons représente un pourcentage prédéterminé du nombre total d'échantillons des différentes classes.

Ceci permet de définir une classe majoritaire selon un deuxième critère selon la présente invention.

Avantageusement, le microprocesseur est en outre configuré pour sélectionner les séquences à sous-échantillonner parmi ledit ensemble de séquences en fonction des critères de sélection prédéterminés.

Ce mode de réalisation permet d'affiner la sélection des séquences à échantillonner afin d'améliorer davantage la précision du classifieur.

Selon un mode de réalisation de la présente invention, les critères de sélection prédéterminés comportent la sélection des séquences présentant une mesure de similarité supérieure à un seuil prédéterminé.

Ceci permet de réduire le nombre d'échantillons dans une classe majoritaire sans supprimer des informations pouvant être pertinentes.

Avantageusement, la mesure de similarité d'une séquence correspond à la moyenne des mesures de similarité déterminées sur chacun des prédicteurs de la séquence.

Ceci permet de déterminer avec précision la mesure de similarité d'une séquence de manière simple.

Selon un autre mode de réalisation de la présente invention, les critères de sélection prédéterminés comportent la sélection des séquences présentant une durée supérieure à une période temporelle prédéterminée.

Cet autre mode de réalisation permet d'avoir une assez bonne sélection des séquences à échantillonner tout en simplifiant encore davantage les étapes de calcul.

Avantageusement, le microprocesseur est configuré pour déterminer l'empreinte carbone de l'utilisateur en fonction de ladite classification du mode de transport.

Selon un mode de réalisation de la présente invention, le dispositif d'analyse prédictive est un téléphone portable.

L'invention vise également un procédé de classification multi-classes mis en œuvre par un dispositif de type téléphone portable d'une application relative à une classification d'un mode de transport par apprentissage automatique, comportant les étapes suivantes :

- acquérir des mesures temporelles successives de grandeurs physiques spécifiques à ladite application,
- calculer des prédicteurs à partir desdites grandeurs physiques, lesdits prédicteurs étant indicatifs d'une position ou d'un état de mobilité,
- construire à partir desdites mesures successives des suites d'échantillons, chaque échantillon étant un vecteur temporel formé d'un nombre prédéterminé de prédicteurs,
- décomposer chaque suite d'échantillons en un ensemble de séquences correspondant chacune à une classe spécifique parmi un ensemble de classes prédéterminées, ledit ensemble de classes prédéterminées correspondant à différents modes de transport,
- sous-échantillonner des séquences associées à des classes parmi ledit ensemble de classes prédéterminées en conservant pour chaque séquence sélectionnée une fraction prédéterminée d'échantillons de ladite séquence, formant ainsi des classes associées à des échantillons équilibrés, et
- construire un classifieur définissant la classification de mode de transport à partir desdits échantillons équilibrés par apprentissage automatique.

L'invention vise aussi un programme d'ordinateur comportant des instructions de code pour la mise en œuvre du procédé selon le procédé ci-dessus lorsqu'il est exécuté par un microprocesseur.

## BRÈVE DESCRIPTION DES DESSINS

La Fig. 1 illustre de manière schématique un dispositif de classification multi-classes d'une application par apprentissage automatique, selon un mode de réalisation de l'invention ;

La Fig. 2 est un organigramme illustrant de manière schématique un procédé de classification multi-classes d'une application par apprentissage automatique, selon un premier mode de réalisation de l'invention ;

La Fig. 3 est une représentation graphique d'un exemple de classification d'un mode de transport, selon un mode de réalisation de l'invention ;

La Fig. 4 est un organigramme illustrant de manière schématique un procédé de classification multi-classes d'une application par apprentissage automatique, selon un deuxième mode de réalisation de l'invention ;

La Fig. 5 est une représentation graphique d'une classification d'un mode de transport, selon le mode de réalisation de la Fig. 4 ;

La Fig. 6 est un organigramme illustrant de manière schématique un procédé de classification multi-classes d'une application par apprentissage automatique, selon un troisième mode de réalisation de l'invention ;

La Fig. 7 est un graphe représentant la similarité des séquences en fonction de leurs durées, selon l'exemple de la Fig. 5 ; et

La Fig. 8 est une représentation graphique d'une classification d'un mode de transport, selon le mode de réalisation de la Fig. 6.

## EXPOSÉ DÉTAILLÉ DE MODES DE RÉALISATION PARTICULIERS

Le concept à la base de l'invention est d'appliquer localement une technique de sous-échantillonnage à des séquences spécifiques de données.

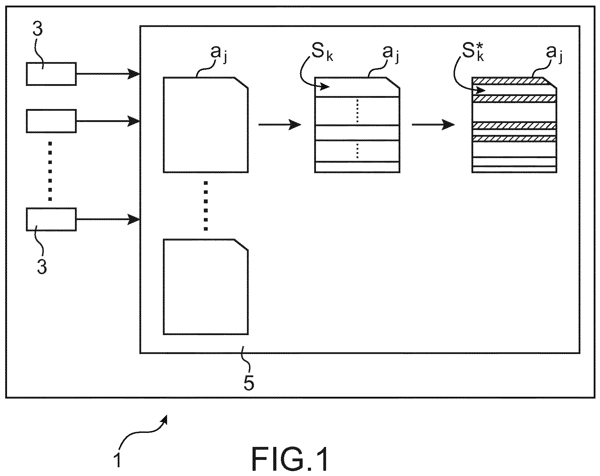

La Fig. 1 illustre de manière schématique un dispositif de classification multi-classes d'une application par apprentissage automatique, selon un mode de réalisation de l'invention.

Un exemple d'une application non revendiquée concerne la classification automatique de différents modes de fonctionnements d'un engin ou d'une machine selon un ensemble de classes. En particulier, ceci peut concerner le test et la classification de différents modes opératoires d'un nouveau matériel (par exemple un nouveau moteur sur un banc d'essai) en lui faisant subir des conditions opératoires pouvant être très changeantes, imprévisibles et pouvant comporter des conditions extrêmes. Ainsi, l'application peut consister à identifier les anomalies en fonction des différentes classes de modes opératoires de l'engin.

La présente invention concerne la classification d'un mode de transport de l'utilisateur d'un dispositif de classification multi-classes étant intégré dans un dispositif de type téléphone portable.

Encore un autre exemple d'une application non revendiquée concerne la classification de l'état d'un utilisateur par exemple l'état de stress selon l'activité d'une personne. Dans ce cas, le dispositif d'analyse prédictive peut être intégré dans un bracelet ou une montre connectée portée par l'utilisateur.

Quel que soit l'application, le dispositif de classification multi-classes 1 selon l'invention est adapté pour acquérir des signaux, équilibrer les données issues de ces signaux et construire un classifieur à partir de ces données équilibrées par apprentissage automatique.

En effet, le dispositif de classification multi-classes 1 comporte des capteurs 3 et un microprocesseur 5. Les capteurs 3 sont configurés pour mesurer à des instants successifs des grandeurs physiques (par exemple, accélération, vitesse, etc.) spécifiques à l'application. Selon le type de l'application, les capteurs 3 peuvent comporter des accéléromètres, des sondes de température, des sondes de pression, des baromètres, des capteurs de conductivité électriques, des sondes de rythme cardiaque et d'activité électrodermale de l'utilisateur, etc.

Le microprocesseur 5 est configuré pour acquérir depuis les capteurs 3 les mesures successives des grandeurs physiques et pour calculer à partir de ces grandeurs physiques un nombre déterminé de caractéristiques ou d'indicateurs statistiques (moyenne, variance, etc.) appelés « prédicteurs » formant ainsi, à chaque instant d'acquisition, un vecteur comportant un nombre déterminé de prédicteurs. Dans la suite, chaque vecteur temporel est appelé « échantillon » ou tout simplement un point.

En outre, le microprocesseur 5 est configuré pour construire des suites continues $a_j$ d'échantillons (i.e. suites de vecteurs) où chaque suite $a_j$ d'échantillons est associée à une période de temps continue.

Ensuite, le microprocesseur 5 est configuré pour décomposer chaque suite $a_j$ d'échantillons en un ensemble de sous-suites dites « séquences » $S_k$ correspondant chacune à une classe spécifique parmi un ensemble de classes prédéterminées. L'ensemble de classes dépend bien entendu de l'application considérée. Cet ensemble peut correspondre aux différents modes de transport ou aux différents modes de fonctionnement d'un équipement ou aux différents états de stress d'un utilisateur, etc.

Toutefois, la distribution des échantillons dans les différentes classes peut être non-équilibrée et, par conséquent, le microprocesseur 5 est adapté pour rééquilibrer cette distribution avant d'appliquer l'apprentissage automatique.

En effet, le microprocesseur 5 est configuré pour sous-échantillonner des séquences associées à des classes parmi l'ensemble de classes prédéterminées en conservant pour chaque séquence sélectionnée une fraction prédéterminée d'échantillons représentatifs de la séquence formant ainsi des séquences équilibrés $S_k^*$ . On notera qu'il est avantageux de sous-échantillonner uniquement les séquences associées à des classes majoritaires. Toutefois, on peut également sous-échantillonner toutes les séquences de manière systématique. Le sous-échantillonnage des séquences permet de former des classes associées à des données équilibrées.

Enfin, le microprocesseur 5 est configuré pour mettre en œuvre un algorithme d'apprentissage automatique afin de construire un classifieur F à partir des échantillons équilibrés.

L'apprentissage automatique est une méthode algorithmique connue par l'homme du métier, qui permet d'automatiser la construction d'un classifieur F de prédiction à partir d'un ensemble de données d'apprentissage formé par les données équilibrées.

Dans la suite, l'invention sera exposée pour une application de classification de mode de transport d'un utilisateur muni d'un téléphone portable comportant le dispositif de classification multi-classes, selon la Fig. 1.

Dans ce cas, les capteurs 3 peuvent comporter un accéléromètre, un magnétomètre, des capteurs inertiels, un GPS, un compteur de vitesse, un baromètre, etc. mesurant par exemple l'accélération, la vitesse et la position de l'utilisateur.

A partir des mesures brutes de grandeurs physiques des différents capteurs 3, le microprocesseur 5 du téléphone portable (non représenté) est configuré de manière connue pour construire un nombre déterminé $p$ de prédicteurs $P_u$ ($u = 1, ... , p$) indicatifs de la position ou de l'état de mobilité du téléphone (par exemple, énergie vibratoire totale, énergie vibratoire dans une bande de fréquence, etc.). Ces prédicteurs $P_u$ sont construits en appliquant par exemple des critères statistiques de position (moyenne, médiane, etc.) ou de dispersion (variance, écart-type, etc.) sur les données brutes (par exemple, accélération, vitesse, altitude, etc.) issues des capteurs.

Les différents prédicteurs $P_u$ issus des mesures correspondent à des indicateurs et chaque ensemble de $p$ prédicteurs $P_u$ acquis à un instant donné $t_i$ forme un échantillon temporel $x_i$. Autrement dit, un échantillon $x_i$ est un vecteur de taille $p$ associé à un instant $t_i$.

Par ailleurs, à partir de tous les échantillons $x_i$ successifs ($i = 1, ... , m_j$), on construit un ensemble d'acquisitions $a_j$ ($j = 1, ... , n$) où chaque acquisition $a_j$ correspond à un enregistrement sur une période de temps continue $\Delta T_j$ correspondant à la période entre $t_1$ et $t_{mj}$. Chaque acquisition $a_j$ est ainsi une suite échantillons associée à une période de temps continue $\Delta T_j$ correspondante.

L'ensemble des acquisitions $a_j$ ($j = 1, ... , n$) forme une base de données $D$ pouvant être représentée par une matrice de dimension $M \times p$ où chaque ligne i correspond à un vecteur-échantillon $x_i$ de taille $p$ et chaque colonne $u$ correspond à un vecteur-prédicteur $P_u$ de taille $M = m_1 \times m_2 \times ... \times m_n$ sachant que chaque acquisition $a_j$ comporte $m_j$ échantillons.

La base de données $D$ peut être décomposée en plusieurs parties $D_j$ selon l'ensemble d'acquisitions $a_j$ c'est-à-dire, $D = \cup D_j$ où chaque acquisition $a_j$ (i.e. chaque enregistrement sur une période continue) correspond à une partie $D_j$.

On notera que, lors de chaque acquisition $a_j$, la classe peut varier et par conséquent, on appellera « séquence » $S_k$, l'ensemble de données $D_{jk}$ continues temporellement dans une acquisition $a_j$ et de classe unique $C_k$. Alors, chaque partie $D_j$ de la base de données peut être à nouveau décomposée en un ensemble de sous-parties $D_{jk}$, c'est-à-dire : $D_j = \cup D_{jk}$ où $k = 1, ... , K(j)$. Ainsi, chaque sous-partie $D_{jk}$ est une séquence $S_k$ formant une matrice de dimension $l(k) \times p$ correspondant aux données de l'acquisition $a_j$ pour lesquelles la classe est constante et vaut $C_k$.

Le principe de l'invention consiste à appliquer le sous-échantillonnage à chaque séquence $S_k$ et non pas de façon globale sur toute les acquisitions $a_j$. Ceci permet de s'assurer qu'après l'étape de sous-échantillonnage, la base de données $D$ comporte des échantillons de chaque sous-partie $D_{jk}$ correspondant à chaque séquence $S_k$ évitant ainsi de perdre toute information pertinente. En outre, aucune hypothèse sur la nature du problème n'est nécessaire permettant tout genre de classification : binaire ou multi-classes. De plus, le sous-échantillonnage selon la méthode de l'invention est indépendant du type de classifieur qui est construit par la suite.

Avantageusement, pour plus de simplicité et de rapidité, on ne supprime des échantillons que de la (ou les) séquences $S_k$ associées à la (ou les) classe(s) majoritaire(s).

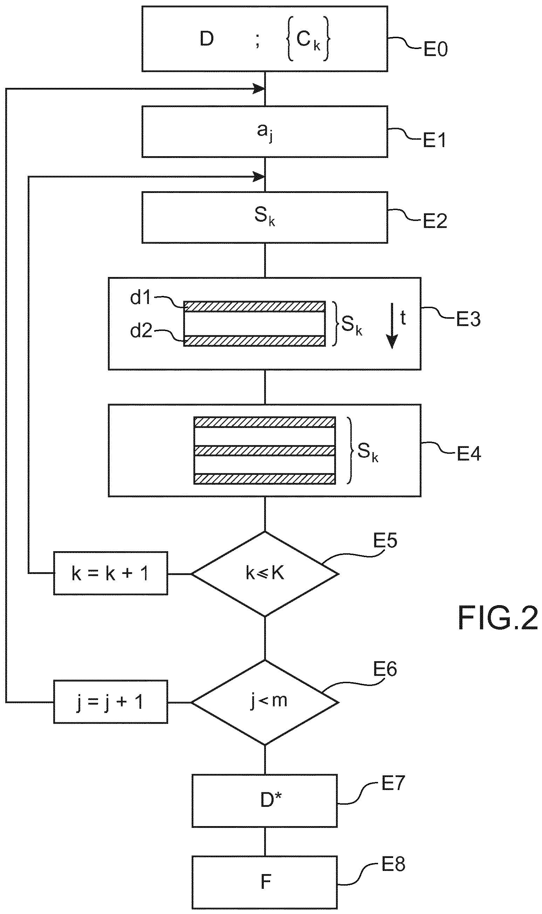

La Fig. 2 est un organigramme illustrant de manière schématique un procédé de classification multi-classes d'une application par apprentissage automatique, selon un premier mode de réalisation de l'invention.

L'étape E0 est une étape d'initialisation qui consiste à définir la base de données $D$ (i.e. matrice $M \times p$) et les classes $C_k$ sur lesquelles le sous-échantillonnage est appliqué.

Selon un premier mode de réalisation, le sous-échantillonnage est appliqué à l'ensemble de classes prédéterminées $C$ associées à l'application.

Selon un deuxième mode de réalisation plus avantageux, le sous-échantillonnage est appliqué sur un sous-ensemble de classes et plus particulièrement sur des séquences associées à un sous-ensemble de classes majoritaires parmi l'ensemble de classes prédéterminées.

Une classe majoritaire peut être automatiquement identifiée selon différentes manières ou critères.

Selon un premier exemple, une classe majori-

taire $C_k$ est une classe dont le nombre $l(k)$ d'échantillons est supérieur à la valeur moyenne $\overline{M}$ d'échantillons de l'ensemble de classes $C$ prédéterminées.

Selon un autre exemple, une classe majoritaire $C_k$ est une classe dont le nombre cumulé d'échantillons représente un pourcentage prédéterminé (par exemple, 50%) du nombre total d'échantillons.

Les étapes E1-E6 forment deux boucles imbriquées où on boucle d'abord sur l'ensemble des acquisitions $a_j$ ($j = 1, \dots, m$) de sorte que sur chaque acquisition courante $a_j$, on boucle ensuite (étapes E2-E5) sur les séquences $S_k$ ($S_k \in a_j$) où $k = 1, \dots, K(j)$ pour lesquelles la classe est unique, $K(j)$ étant le nombre de classes pour l'acquisition courante $a_j$.

Ainsi, à l'étape E1, on a une acquisition courante $a_j$ et à l'étape E2, on a une séquence courante $S_k$ associée à une classe majoritaire courante $C_k$ identifiée selon l'un des exemples ci-dessus.

Aux étapes E3 et E4, on conserve une fraction prédéterminée d'échantillons $x_i$ appartenant à chaque séquence courante $S_k$.

Avantageusement, la fraction prédéterminée d'échantillons comporte des éléments aux bornes de la séquence ainsi que certains éléments intermédiaires.

En effet, à l'étape E3, pour une séquence courante $S_k$ de durée totale $d_k$, on conserve les échantillons au début et à la fin de cette séquence, sur une période prédéterminée $d_1$ typiquement inférieure à 60 secondes ($0 \le d_1 \le 60$).

A l'étape E4, on conserve des échantillons intermédiaires sur la partie restante de la séquence courante $S_k$ de durée $d_k - 2d_1$. Avantageusement, les éléments intermédiaires sont régulièrement espacés dans la séquence $S_k$ en sélectionnant un échantillon sur un nombre prédéterminé $q$ d'échantillons. Par exemple, on conserve 1 échantillon sur 2 ($q = 2$) ou 1 échantillon sur 3 ($q = 3$). Les autres échantillons de la séquence sont supprimés.

L'étape E5 est un test pour vérifier si toutes les séquences $S_k$ associées aux classes majoritaires de l'acquisition courante $a_j$ n'ont pas encore été analysées. Si oui, on sélectionne la séquence suivante et on boucle sur l'étape E2 et sinon, on passe à l'étape suivante E6.

L'étape E6 est un deuxième test pour vérifier si toutes les acquisitions $a_j$ n'ont pas encore été considérées. Si oui, on sélectionne la séquence suivante et on boucle sur l'étape E1 et sinon, on passe à l'étape E7.

A l'étape E7, on obtient une base de données $D^*$ sous-échantillonnées et comportant des classes plus homogènes.

A l'étape E8, on construit un classifieur F à partir des données équilibrées de la base de données $D^*$ obtenue à l'étape précédente. La construction est réalisée de manière connue par apprentissage automatique. La construction du classifieur F consiste à ajouter une colonne supplémentaire à la matrice de la base de données. Cette dernière colonne permet de prédire ou de classifier correctement la classe de sortie qui dans cet exemple correspond à la classe du mode de transport.

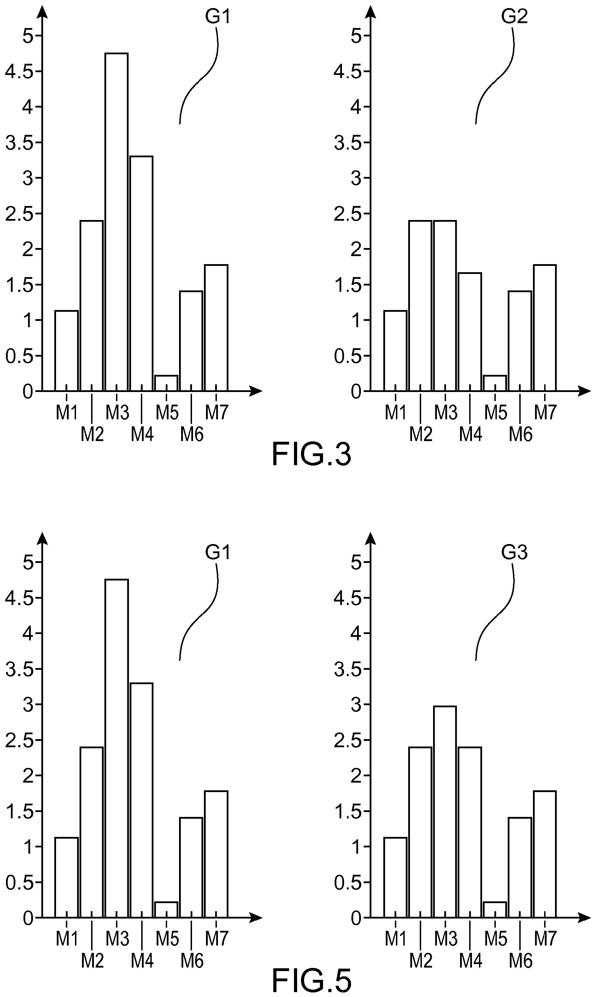

La Fig. 3 est une représentation graphique d'un exemple de classification d'un mode de transport, selon un mode de réalisation de l'invention.

Cette application comporte sept classes de mode de transport M1-M7: vélo M1 ; avion M2 ; train M3 ; route (voiture, bus, etc.) M4 ; course à pied M5 ; immobilité M6 ; et marche à pied M7.

La base de données de cette application est issue des capteurs d'un téléphone portable. La base de données initiale $D$ comporte 149491 échantillons distribués entre les différents modes de transport M1-M7 selon le graphe G1. Ce dernier est un diagramme en bâtons où chaque mode de transport (i.e. chaque classe) est représenté par un rectangle dont la hauteur représente le nombre d'échantillons correspondant.

Les modes de transport par train M3 et par route M4 sont des classes majoritaires dont le nombre d'échantillons cumulés est supérieur à 50% du nombre total d'échantillons.

En appliquant le sous-échantillonnage selon le premier mode de réalisation de la Fig. 2 sur uniquement les classes majoritaires M3 et M4, on obtient une nouvelle base de données $D^*$ représentée sur le graphe G2 comportant 109618 échantillons. Dans cet exemple, le sous-échantillonnage a été appliqué en prenant une période prédéterminée $d_1 = 0$ et en sélectionnant 1 échantillon sur 2 (i.e. $q = 2$).

Dans la nouvelle représentation graphique G2, les classes sont plus équilibrées et la réduction en nombre d'instance est d'environ 27% (i.e. $(149491-109618)/149491$).

En outre, si on définit une mesure de déséquilibre $I$ comme étant le rapport entre l'écart-type et la moyenne du vecteur consulté par le nombre d'instances (i.e. échantillons) de chaque classe, alors on note une forte réduction de ce déséquilibre $I$, passant de 0,71 à 0,49.

Par ailleurs, après la construction d'un classifieur simple (de type arbre de décision avec un nombre de coupes maximum de 16), on détermine la performance en calculant la proportion de prédictions correctes faites sur les données d'apprentissage. Plus particulièrement, en utilisant comme métrique de performance la « F-mesure », on constate que la plus mauvaise performance, celle de la classe minoritaire M1 (vélo) progresse de 4%, passant de 30% à 34% alors que la performance globale (i.e. la moyenne sur les différentes classes) est à peine dégradée, passant de 63% à 62%, soit -1%. Par conséquent, le rééquilibrage de la base de données selon le premier mode de réalisation permet d'améliorer les performances de la classe minoritaire sans dégrader les performances globales.

Avantageusement, le microprocesseur 5 est en outre configuré pour déterminer l'empreinte carbone de l'utilisateur en fonction de la classification du mode de transport. En effet, en ayant un classifieur qui prédit correctement le mode de transport, on peut estimer l'empreinte carbone d'une personne avec une grande précision.

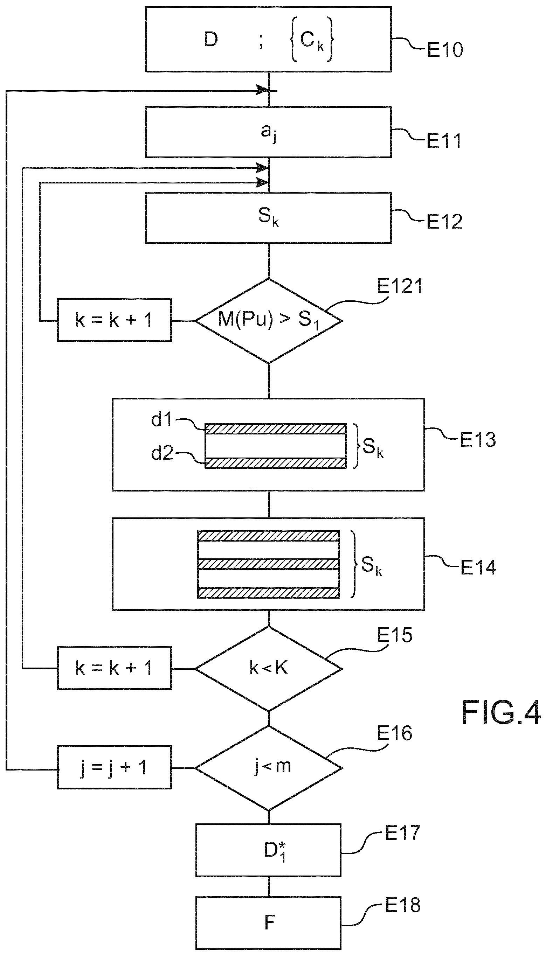

Les Figs. 4-8 illustrent d'autres modes de réalisations dans lesquels la sélection des séquences à sous-échantillonner est réalisée en fonction des critères prédéterminés.

Plus particulièrement, la Fig. 4 est un organigramme illustrant de manière schématique un procédé de classification multi-classes d'une application par apprentissage automatique, selon un deuxième mode de réalisation de l'invention.

L'organigramme de la Fig. 4 est identique à celui de la Fig. 2 sauf que lors d'un traitement d'une séquence courante, le sous-échantillonnage est appliqué en fonction d'une mesure de similarité. Le principe de ce deuxième mode de réalisation est le fait qu'il est préférable de faire le sous-échantillonnage sur des séquences dont les données se ressemblent entre elles afin de ne pas perdre d'information pertinente.

Selon ce mode de réalisation, à partir d'une mesure de similarité d'un prédicteur donné, on considère que la mesure de similarité d'une séquence correspond à la moyenne des mesures de similarité sur chacun des prédicteurs de la séquence.

Plus particulièrement, soit $M(P_u)$ une mesure de similarité d'un prédicteur donné $P_u$ de taille $l(k)$ sachant que le prédicteur $P_u$ est un vecteur (colonne) appartenant à une séquence donnée $S_k$ de dimension $l(k) \times p$. La mesure de similarité $M(P_u)$ peut être basée sur le calcul d'une auto-covariance normalisée du prédicteur $P_u$ pour un décalage r donné (par exemple, $r = 3$). En variante, la mesure peut être basée sur le calcul de la moyenne de l'auto-covariance normalisée du prédicteur $P_u$ sur des décalages de 1 à $N_c$ (par exemple, $N_c = 10$).

Alors, pour la séquence donnée $S_k$ (matrice $l(k) \times p$), on peut définir une mesure de similarité $M(S_k)$ de la séquence comme la moyenne sur les prédicteurs de la mesure de similarité $M(P_u)$ définie sur chacun des prédicteurs : $M(S_k) = \overline{M(P_u)}$. Le sous-échantillonnage est réalisé uniquement sur les séquences dont la mesure de similarité $M(S_k)$ est supérieure à un certain seuil $s_1$. La valeur du seuil $s_1$ peut être choisie selon le type de l'application et peut être un nombre supérieur ou égal à 0,1.

Plus particulièrement, l'étape E10 concerne la définition de la base de données $D$ de dimension $M \times p$ et des classes $C_k$ sur lesquelles le sous-échantillonnage est appliqué.

On considère que le sous-échantillonnage est appliqué sur des séquences associées à des classes majoritaires.

Comme précédemment, l'organigramme comporte deux boucles imbriquées sur l'ensemble des acquisitions $a_j$ ($j = 1, ..., m$) et sur l'ensemble des séquences $S_k$ ($S_k \in a_j$) où $k = 1, ..., K(j)$ sauf qu'une boucle interne supplémentaire est introduite pour vérifier la mesure de similarité de chaque séquence.

Ainsi, à l'étape E11, on a une acquisition courante $a_j$ et à l'étape E12, on a une séquence courante $S_k$ associée à une classe majoritaire courante $C_k$.

L'étape E121 est un test pour vérifier si la mesure de similarité de la séquence est supérieure à un seuil prédéterminée $s_1$ (par exemple, $s_1 = 0,3$). Si oui, on passe à l'étape E13 et sinon, on sélectionne la séquence suivante et on boucle sur l'étape E12.

Aux étapes E13 et E14, on conserve une fraction prédéterminée d'échantillons $x_i$ appartenant à la séquence courante $S_k$ sélectionnée à l'étape précédente.

Comme précédemment, à l'étape E13, on conserve les échantillons au début et à la fin de la séquence sélectionnée, sur une période prédéterminée $d_1$.

A l'étape E14, on conserve des échantillons intermédiaires sur la partie restante de la séquence courante sélectionnée $S_k$. Par exemple, on conserve 1 échantillon sur 2 ou 1 échantillon sur 3 et les autres échantillons de la séquence sont supprimés.

L'étape E15 est un deuxième test pour vérifier si toutes les séquences $S_k$ associées aux classes majoritaires de l'acquisition courante $a_j$ n'ont pas encore été analysées. Si oui, on sélectionne la séquence suivante et on boucle sur l'étape E12 et sinon, on passe à l'étape E16.

L'étape E16 est un troisième test pour vérifier si toutes les acquisitions $a_j$ n'ont pas encore été considérées. Si oui, on sélectionne la séquence suivante et on boucle sur l'étape E11 et sinon, on passe à l'étape E17.

A l'étape E17, on obtient une nouvelle base de données $D_1^*$ sous-échantillonnées et comportant des classes plus homogènes.

A l'étape E18, on construit un classifieur F à partir des données équilibrées de la base de données $D_1^*$ obtenue à l'étape précédente.

La Fig. 5 est une représentation graphique d'une classification d'un mode de transport, selon le mode de réalisation de la Fig. 4.

On considère le même exemple que précédemment. Ainsi, le graphe G1 représente toujours une base de données initiale $D$ comportant 149491 échantillons distribués entre les différents modes de transport M1-M7.

En appliquant le sous-échantillonnage selon le deuxième mode de réalisation de la Fig. 4 sur uniquement les classes majoritaires M3 et M4, on obtient une nouvelle base de données $D_1^*$ représentée sur le graphe G3 comportant 122618 échantillons. Dans cet exemple, le sous-échantillonnage a été appliqué selon les paramètres suivants : $s_1 = 0,3$; $d_1 = 0$; $q = 3$.

Dans la nouvelle représentation graphique, les classes sont plus équilibrées et la réduction en nombre d'instance est d'environ 19%. La mesure de déséquilibre $I$ passe de 0,71 à 0,53.

Par ailleurs, après la construction d'un classifieur simple, on constate que la plus mauvaise performance, celle de la classe minoritaire M1 (vélo) progresse de 11%, passant de 30% à 41% alors que la performance globale (i.e. la moyenne sur les différentes classes) est amélioré de 1%, passant de 63% à 64%.

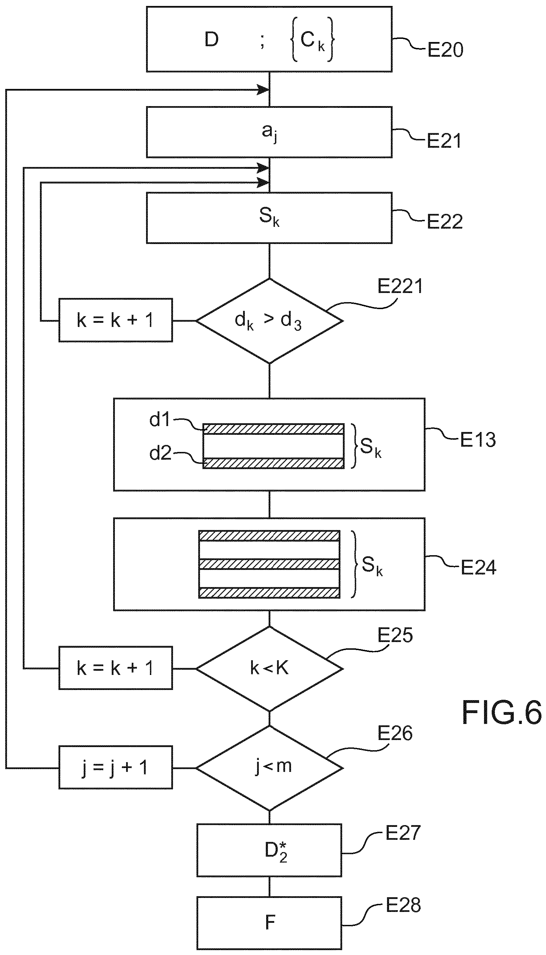

La Fig. 6 est un organigramme illustrant de manière schématique un procédé de classification multi-classes d'une application par apprentissage automatique, selon un troisième mode de réalisation de l'invention.

L'organigramme de la Fig. 6 est identique à celui de la Fig. 4 sauf que lors du traitement d'une séquence courante, le sous-échantillonnage est basé cette fois ci sur la durée de la séquence et non plus sur la mesure de similarité.

Le principe de ce troisième mode de réalisation est l'existence dans la plupart des cas d'une relation croissante entre la similarité et la durée d'une séquence.

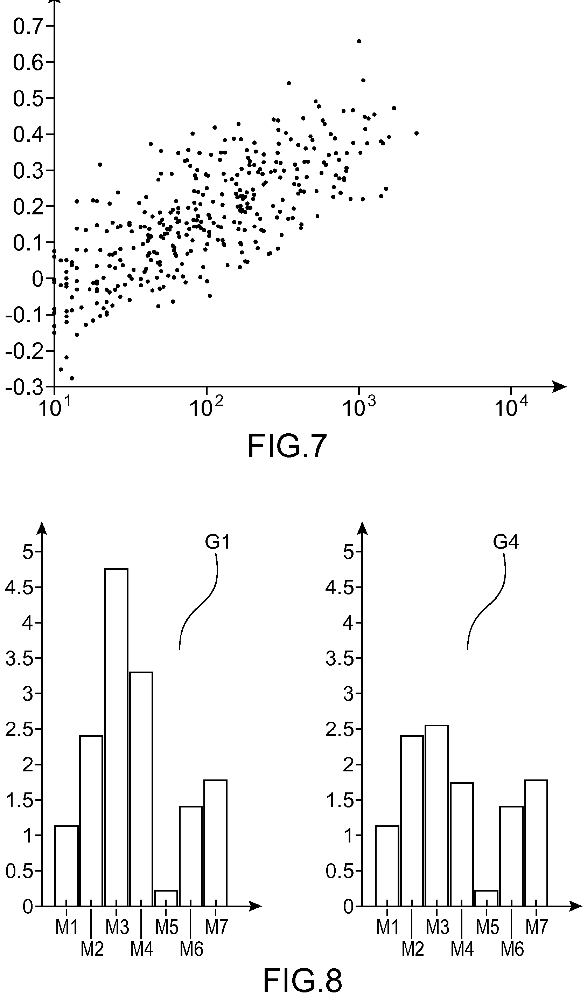

En effet, la Fig. 7 est un graphe représentant la similarité des séquences en fonction de leurs durées, selon l'exemple de la Fig. 5.

Les données de l'exemple de la Fig. 5 sont utilisées pour représenter la relation entre la mesure de similarité des séquences et leurs durées en forme de nuage de points. La mesure de similarité est représentée sur l'axe des ordonnées tandis que la durée de chaque séquence est représentée sur l'axe des abscisses. Cette représentation met clairement en évidence la corrélation croissante entre la mesure de similarité et le nombre d'échantillons. Ceci signifie que plus une séquence est longue, plus il est probable que la mesure de similarité de cette séquence soit élevée.

L'avantage de ce test est le fait qu'il permet de mieux équilibrer les classes par rapport au premier mode de réalisation selon la Fig. 2 sans exiger d'importantes ressources en calcul.

L'étape E20 de la Fig. 6 concerne la définition de la base de données $D$ de dimension $M \times p$ et des classes $C_k$ sur lesquelles le sous-échantillonnage est appliqué.

On considère que le sous-échantillonnage est appliqué sur des séquences associées à des classes majoritaires.

Comme précédemment, l'organigramme comporte trois boucles imbriquées sauf que la troisième boucle est un test pour vérifier la durée de chaque séquence.

Ainsi, à l'étape E21, on a une acquisition courante $a_j$ et à l'étape E22, on a une séquence courante $S_k$ associée à une classe majoritaire courante $C_k$.

L'étape E221 est un test pour vérifier si la durée $d_k$ en secondes de la séquence $S_k$ est supérieure à une période temporelle prédéterminée $d_3$ (par exemple, $d_3$ = 300 $s$). Si oui, on passe à l'étape E23 et sinon, on sélectionne la séquence suivante et on boucle sur l'étape E22.

Aux étapes E23 et E24, on conserve une fraction prédéterminée d'échantillons $x_i$ appartenant à la séquence courante $S_k$ sélectionnée à l'étape précédente comme les étapes E13 et E14 de la Fig. 4.

L'étape E25 est un deuxième test pour vérifier si toutes les séquences $S_k$ associées aux classes majoritaires de l'acquisition courante $a_j$ ont été analysées. Si oui, on passe à l'étape E26 et sinon, on sélectionne la séquence suivante et on boucle sur l'étape E22.

L'étape E26 est un troisième test pour vérifier si toutes les acquisitions $a_j$ ont été considérées. Si oui, on passe à l'étape E27 et sinon, on sélectionne la séquence suivante et on boucle sur l'étape E21.

A l'étape E27, on obtient une nouvelle base de données $D_2^*$ sous-échantillonnées et comportant des classes plus homogènes.

A l'étape E28, on construit un classifieur à partir des données équilibrées de la base de données $D_2^*$ obtenue à l'étape précédente.

La Fig. 8 est une représentation graphique d'une classification d'un mode de transport, selon le mode de réalisation de la Fig. 6.

On considère le même exemple que précédemment. Ainsi, le graphe G1 représente toujours une base de données initiale $D$ comportant 149491 échantillons distribués entre les différents modes de transport M1-M7.

En appliquant le sous-échantillonnage selon le troisième mode de réalisation de la Fig. 4 sur uniquement les classes majoritaires M3 et M4, on obtient une nouvelle base de données $D_2^*$ représentée sur le graphe G4 comportant 111706 échantillons. Dans cet exemple le sous-échantillonnage a été appliqué selon les paramètres suivants : $d_3$ = 300; $d_1$ = 0; $q$ = 3.

Dans la nouvelle représentation graphique, les classes sont plus équilibrées et la réduction en nombre d'instance est d'environ 26%. La mesure de déséquilibre $I$ passe de 0,71 à 0,49.

Par ailleurs, après la construction d'un classifieur simple, on constate que la plus mauvaise performance, celle de la classe minoritaire M1 (vélo) progresse de 13%, passant de 30% à 43% alors que la performance globale est à peine dégradée, passant de 63% à 62%.

## Revendications

1. Dispositif de classification multi-classes, de type téléphone portable, d'une application relative à une classification d'un mode de transport par apprentissage automatique, **caractérisé en ce qu'**il comporte :

   - des capteurs (3) configurés pour mesurer à des instants successifs des grandeurs physiques spécifiques à ladite application,
   - un microprocesseur (5) configuré pour :

      - acquérir lesdites mesures successives depuis les capteurs (3) pour calculer des prédicteurs à partir de grandeurs physiques desdites mesures, lesdits prédicteurs étant indicatifs d'une position ou d'un état de mobilité,

- construire des suites continues ($a_j$) d'échantillons, chaque échantillon étant un vecteur formé d'un nombre prédéterminé de prédicteurs,

- décomposer chaque suite ($a_j$) d'échantillons en un ensemble de séquences ($S_k$) correspondant chacune à une classe spécifique parmi un ensemble de classes prédéterminées, ledit ensemble de classes prédéterminées correspondant à différents modes de transport,

- sous-échantillonner les séquences associées à des classes parmi ledit ensemble de classes prédéterminées en conservant pour chaque séquence sélectionnée une fraction prédéterminée d'échantillons de ladite séquence, formant ainsi des classes associées à des échantillons équilibrés, et

- construire un classifieur (F) définissant la classification de mode de transport à partir desdits échantillons équilibrés par apprentissage automatique.

2. Dispositif selon la revendication 1, **caractérisé en ce que** la fraction prédéterminée d'échantillons comporte des échantillons aux bornes de la séquence ainsi que certains échantillons intermédiaires.

3. Dispositif selon la revendication 1 ou 2, **caractérisé en ce que** les échantillons intermédiaires sont régulièrement espacés dans ladite séquence en sélectionnant un échantillon sur un nombre prédéterminé d'échantillons.

4. Dispositif selon l'une quelconque des revendications précédentes, **caractérisé en ce que** les séquences sous-échantillonnées sont des séquences associées à un sous-ensemble de classes majoritaires parmi ledit ensemble de classes prédéterminées.

5. Dispositif selon la revendication 4, **caractérisé en ce qu'**une classe majoritaire est une classe dont le nombre d'échantillons est supérieur à la valeur moyenne d'échantillons des différentes classes.

6. Dispositif selon la revendication 4, **caractérisé en ce qu'**une classe majoritaire est une classe dont le nombre cumulé d'échantillons représente un pourcentage prédéterminé du nombre total d'échantillons des différentes classes.

7. Dispositif selon l'une quelconque des revendications précédentes, **caractérisé en ce que** le microprocesseur (5) est en outre configuré pour sélectionner les séquences à sous-échantillonner parmi ledit ensemble de séquences en fonction des critères de sélection prédéterminés.

8. Dispositif selon la revendication 7, **caractérisé en ce que** les critères de sélection prédéterminés comportent la sélection des séquences présentant une mesure de similarité supérieure à un seuil prédéterminé, chaque mesure de similarité d'un prédicateur d'une séquence étant basée sur le calcul d'une autocovariance dudit prédicteur.

9. Dispositif selon la revendication 8, **caractérisé en ce que** la mesure de similarité d'une séquence correspond à la moyenne des mesures de similarité déterminées sur chacun des prédicteurs de la séquence.

10. Dispositif selon la revendication 7, **caractérisé en ce que** les critères de sélection prédéterminés comportent la sélection des séquences présentant une durée supérieure à une période temporelle prédéterminée.

11. Dispositif selon l'une quelconque des revendications précédentes, **caractérisé en ce que** le microprocesseur est configuré pour déterminer l'empreinte carbone d'un utilisateur dudit dispositif en fonction de ladite classification du mode de transport.

12. Procédé de classification multi-classes mis en œuvre par un dispositif de type téléphone portable d'une application relative à une classification d'un mode de transport par apprentissage automatique, **caractérisé en ce qu'**il comporte les étapes suivantes :

- acquérir par des capteurs (3) dudit dispositif des mesures temporelles successives de grandeurs physiques spécifiques à ladite application,

- calculer des prédicteurs à partir desdites grandeurs physiques, lesdits prédicteurs étant indicatifs d'une position ou d'un état de mobilité, et **en ce que** les étapes suivantes sont exécutables par un microprocesseur dudit dispositif :

- construire à partir desdites mesures successives des suites d'échantillons, chaque échantillon étant un vecteur temporel formé d'un nombre prédéterminé de prédicteurs,

- décomposer chaque suite d'échantillons en un ensemble de séquences correspondant chacune à une classe spécifique parmi un ensemble de classes prédéterminées, ledit ensemble de classes prédéterminées correspondant à différents modes de transport,

- sous-échantillonner les séquences associées à des classes parmi ledit ensemble de classes prédéterminées en conservant pour chaque séquence sélectionnée une fraction prédéterminée d'échantillons de ladite séquence, formant ainsi des classes associées à des échantillons équilibrés, et
- construire un classifieur définissant la classification de mode de transport à partir desdits échantillons équilibrés par apprentissage automatique.

13. Programme d'ordinateur comportant des instructions de code pour la mise en œuvre du procédé selon la revendication 12 lorsqu'il est exécuté par microprocesseur d'un dispositif de type téléphone portable.

**Patentansprüche**

1. Mehrklassen-Klassifizierungsvorrichtung, vom Typ Mobiltelefon, einer Anwendung zur Klassifizierung eines Transportmittels durch maschinelles Lernen, **dadurch gekennzeichnet, dass** sie Folgendes umfasst:

   - Sensoren (3), die so eingerichtet sind, dass sie zu aufeinanderfolgenden Zeitpunkten physikalische Größen messen, die für diese Anwendung spezifisch sind,
   - einen Mikroprozessor (5), der zu Folgendem konfiguriert ist:

     - Erfassen der besagten aufeinanderfolgenden Messungen von den Sensoren (3), um Prognosefaktoren aus physikalischen Größen der Messungen zu berechnen, wobei die Prognosefaktoren auf eine Position oder einen Mobilitätszustand hinweisen,
     - Aufbau kontinuierlicher Folgen ($a_j$) von Proben, wobei jede Probe ein Vektor ist, der aus einer vorbestimmten Anzahl von Prädiktoren besteht,
     - Zerlegen jeder Folge ($a_j$) von Proben in eine Gruppe von Sequenzen ($S_k$), die jeweils einer spezifischen Klasse aus einer Gruppe von vorbestimmten Klassen entsprechen, wobei die vorbestimmte Gruppe von Klassen verschiedenen Transportmitteln entspricht,
     - Unterstichprobennahme der mit Klassen verbundenen Sequenzen aus der vorbestimmten Gruppe von Klassen, wobei für jede ausgewählte Sequenz ein vorbestimmter Anteil von Proben der Sequenz beibehalten wird, wodurch Klassen gebildet werden, die mit ausgeglichenen Proben verbunden sind, und

   - Aufbau eines Klassifikators (F), der die Klassifizierung des Transportmittels anhand der durch maschinelles Lernen ausgeglichenen Stichproben definiert.

2. Vorrichtung nach Anspruch 1, **dadurch gekennzeichnet, dass** der vorbestimmte Probenanteil Proben an den Endpunkten der Sequenz sowie bestimmte Zwischenproben umfasst.

3. Vorrichtung nach Anspruch 1 oder 2, **dadurch gekennzeichnet, dass** die Zwischenproben in dieser Sequenz durch Auswahl einer Probe aus einer vorbestimmten Anzahl von Proben in regelmäßigen Abständen angeordnet sind.

4. Vorrichtung nach einem der vorhergehenden Ansprüche, **dadurch gekennzeichnet, dass** es sich bei den unterstichprobenartigen Sequenzen um Sequenzen handelt, die einer Untergruppe von Mehrheitsklassen aus der vorbestimmten Gruppe von Klassen zugeordnet sind.

5. Vorrichtung nach Anspruch 4, **dadurch gekennzeichnet, dass** eine Mehrheitsklasse eine Klasse ist, deren Anzahl von Stichproben größer ist als der Stichprobenmittelwert der verschiedenen Klassen.

6. Vorrichtung nach Anspruch 4, **dadurch gekennzeichnet, dass** eine Mehrheitsklasse eine Klasse ist, deren kumulative Anzahl von Proben einen vorbestimmten Prozentsatz der gesamten Anzahl von Proben der verschiedenen Klassen darstellt.

7. Vorrichtung nach einem der vorhergehenden Ansprüche, **dadurch gekennzeichnet, dass** der Mikroprozessor (5) ferner so eingerichtet ist, dass er die zu unterprobenden Sequenzen aus der Gruppe von Sequenzen in Abhängigkeit von den vorbestimmten Auswahlkriterien auswählt.

8. Vorrichtung nach Anspruch 7, **dadurch gekennzeichnet, dass** die vorbestimmten Auswahlkriterien die Auswahl der Sequenzen umfassen, die eine Ähnlichkeitsmessung aufweisen, die über einem vorbestimmten Schwellenwert liegt, wobei jede Ähnlichkeitsmessung eines Prädiktors einer Sequenz auf der Berechnung einer Autokovarianz des Prädiktors basiert.

9. Vorrichtung nach Anspruch 8, **dadurch gekennzeichnet, dass** die Ähnlichkeitsmessung einer Sequenz dem Mittelwert der Ähnlichkeitsmessungen entspricht, die an jedem der Prognosefaktoren der Sequenz bestimmt wurden.

10. Vorrichtung nach Anspruch 7, **dadurch gekennzeichnet, dass** die vorbestimmten Auswahlkriterien die Auswahl der Sequenzen umfassen, die eine längere Dauer als eine vorbestimmte Zeitdauer aufweisen.

11. Vorrichtung nach einem der vorhergehenden Ansprüche, **dadurch gekennzeichnet, dass** der Mikroprozessor so eingerichtet ist, dass er den Kohlenstoff-Fußabdruck eines Benutzers der Vorrichtung in Abhängigkeit von der Klassifizierung des Transportmittels bestimmt.

12. Mehrklassen-Klassifizierungsverfahren, das von einer Vorrichtung des Typs Mobiltelefon einer Anwendung bezüglich einer Klassifizierung eines Transportmittels durch maschinelles Lernen umgesetzt wird, **dadurch gekennzeichnet, dass** es folgende Schritte umfasst:

    - Erfassen durch Sensoren (3) der genannten Vorrichtung von aufeinanderfolgenden zeitlichen Messungen von physikalischen Größen, die für die genannte Anwendung spezifisch sind,
    - Berechnen von Prädiktoren aus diesen physikalischen Größen, wobei die Prädiktoren eine Position oder einen Mobilitätszustand angeben und dass die folgenden Schritte von einem Mikroprozessor der Vorrichtung ausführbar sind:

        - Aufbau aus diesen aufeinanderfolgenden Messungen von Folgen von Proben, wobei jede Probe ein Zeitvektor ist, der aus einer vorbestimmten Anzahl von Prädiktoren gebildet wird,
        - Zerlegen jeder Folge von Proben in eine Gruppe von Sequenzen, die jeweils einer spezifischen Klasse aus einer Gruppe von vorbestimmten Klassen entsprechen, wobei die vorbestimmte Gruppe von Klassen verschiedenen Transportmitteln entspricht,
        - Unterstichprobennahme der mit Klassen verbundenen Sequenzen aus der vorbestimmten Gruppe von Klassen, wobei für jede ausgewählte Sequenz ein vorbestimmter Anteil von Proben der Sequenz beibehalten wird, wodurch Klassen gebildet werden, die mit ausgeglichenen Proben verbunden sind, und
        - Aufbau eines Klassifikators, der die Klassifizierung des Transportmittels aus diesen ausgewogenen Proben durch maschinelles Lernen definiert.

13. Computerprogramm mit Codeanweisungen für die Durchführung des Verfahrens nach Anspruch 12, wenn es von einem Mikroprozessor einer Vorrichtung des Typs Mobiltelefon ausgeführt wird.

## Claims

1. A multi-class classification device, of the mobile phone type, for an application related to the classification of a mode of transport using machine learning, **characterized in that** it comprises:

    - sensors (3) configured to acquire, at successive moments, measurements of physical quantities specific to said application,
    - a microprocessor (5) configured to:

        - acquire said successive measurements from the sensors (3) to calculate predictors from physical quantities of said measurements, said predictors being indicative of a position or a mobility state,
        - construct continuous series (aj) of samples, each sample being a vector composed of a predetermined number of predictors,
        - decompose each series (aj) of samples into a set of sequences (Sk), each corresponding to a specific class among a set of predefined classes, said set of predefined classes corresponding to different modes of transport,
        - under-sample sequences associated with classes among said set of predefined classes by retaining, for each selected sequence, a predetermined fraction of samples from said sequence, thereby forming classes associated with balanced samples, and
        - construct a classifier (F) defining the classification of the mode of transport based on said balanced samples using machine learning.

2. The device according to claim 1, **characterized in that** the predetermined fraction of samples comprises samples at the edges of the sequence as well as certain intermediate samples.

3. The device according to claim 1 or 2, **characterized in that** the intermediate samples are regularly spaced within said sequence by selecting one sample for every predetermined number of samples.

4. The device according to any one of the preceding claims, **characterized in that** the under-sampled sequences are sequences associated with a subset of majority classes among said set of predefined classes.

5. The device according to claim 4, **characterized in that** a majority class is a class whose number of samples exceeds the average value of samples across different classes.

**6.** The device according to claim 4, **characterized in that** a majority class is a class whose cumulative number of samples represents a predetermined percentage of the total number of samples across different classes.

**7.** The device according to any one of the preceding claims, **characterized in that** the microprocessor (5) is further configured to select sequences to be under-sampled among said set of sequences based on predetermined selection criteria.

**8.** The device according to claim 7, **characterized in that** the predetermined selection criteria include the selection of sequences with a similarity measure greater than a predetermined threshold, each similarity measure of a sequence predictor being based on the computation of an autocovariance of said predictor.

**9.** The device according to claim 8, **characterized in that** the similarity measure of a sequence corresponds to the average of the similarity measures determined for each predictor of the sequence.

**10.** The device according to claim 7, **characterized in that** the predetermined selection criteria include the selection of sequences with a duration exceeding a predetermined time period.

**11.** The device according to any one of the preceding claims, **characterized in that** the microprocessor is further configured to determine the carbon footprint of a user of said device based on said classification of the mode of transport.

**12.** A multi-class classification method implemented by a device of the mobile phone type for an application related to the classification of a mode of transport using machine learning, **characterized in that** it comprises the following steps:

- acquiring successive temporal measurements of physical quantities specific to said application via sensors (3) of said device,
- calculating predictors from said physical quantities, said predictors being indicative of a position or mobility state, and wherein the following steps are executable by a microprocessor of said device:

- constructing series of samples from said successive measurements, each sample being a temporal vector composed of a predetermined number of predictors,
- decomposing each series of samples into a set of sequences, each corresponding to a specific class among a set of predefined classes, said set of predefined classes corresponding to different modes of transport,
- under-sampling sequences associated with classes among said set of predefined classes by retaining, for each selected sequence, a predetermined fraction of samples from said sequence, thereby forming classes associated with balanced samples, and
- constructing a classifier defining the classification of the mode of transport based on said balanced samples using machine learning.

**13.** A computer program comprising code instructions for implementing the method according to claim 12 when executed by a microprocessor of a device of the mobile phone type.

FIG.1

FIG.2

FIG.3

FIG.5

FIG.4

FIG.6

FIG.7

FIG.8

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **H. HE**. Learning from Imbalanced Data. *IEEE Transactions on knowledge and data engineering*, 2009, vol. 21 (9)
- **X. Y. LIU et al.** Exploratory undersampling for class-imbalance learning. *IEEE Trans. Syst. Man Cybern. Part B Cybern.*, 2009, vol. 39 (2), 539-550
- Boosting Mobile Apps under Imbalanced Sensing Data. **ZHANG XINGLIN et al.** IEEE Transactions on mobile computing. IEEE Service center, June 2015, vol. 14